# EUROPEAN PATENT APPLICATION

(11) **EP 4 840 635 A2**
(43) Date of publication of application: **18.11.2026**
(21) Application number: 26196765.7
(22) Date of filing: 05.08.2026
(51) Int. Cl.: B33Y 50/02, B29C 64/40, B29C 64/386, B29C 64/393, B33Y 10/00, B33Y 50/00, G06T 17/20, G06T 19/20

(54) **METHOD OF GENERATING SUPPORT MEMBERS CONFIGURED TO SUPPORT THREE-DIMENSIONAL MODELS, COMPUTING DEVICE AND SOTRAGE MEDIUM**

(30) Priority: 14.11.2025 CN 202511681229
(71) Applicant: Shining 3D Tech Co., Ltd., Hangzhou, Zhejiang 311258 (CN)
(72) Inventor: Liu, Zhiyue, Hangzhou, 311258 (CN); Jiang, Tengfei, Hangzhou, 311258 (CN); Qiu, Kaijia, Hangzhou, 311258 (CN); Liu, Yuanchao, Hangzhou, 311258 (CN); Guo, Zhihao, Hangzhou, 311258 (CN); Ji, Chenghui, Hangzhou, 311258 (CN); Chen, Qianyong, Hangzhou, 311258 (CN); Shengxian, Zhen, Hangzhou, 311258 (CN)
(74) Representative: Metida

(57) **Abstract**

A method of generating support members configured to support three-dimensional models is provided. The method includes identifying one or more sensitive portions of a three-dimensional model. One or more support positions on the one or more three-dimensional models are determined based on one or more feasible support regions on the one or more three-dimensional models other than the one or more sensitive portions. One or more conforming bases according to the one or more support positions are generated and One or more support members abutting a forming platform by extending the one or more conforming bases toward a forming platform are generated to circumvent the three-dimensional model. A computing device and a storage device are also provided.

## Description

### TECHNICAL FIELD

The present disclosure relates to a field of additive manufacturing, and in particular, to a method of generating support members configured to support three-dimensional models, a computing device and a storage medium.

### BACKGROUND ART

Additive manufacturing (e.g., three-dimensional (3D) printing) refers to a technique for manufacturing an object by solidifying portions of a build material at specific positions. Additive manufacturing techniques may include stereolithography (also known as vat photopolymerization), selective or fused deposition modeling, direct composite manufacturing, laminated object manufacturing, selective phase area deposition, multi-phase jet solidification, ballistic particle manufacturing, particle deposition, laser sintering, or combinations thereof.

Additive manufacturing has enabled customization of models according to a user's actual needs. During the process of selecting 3D printing for model printing, it is necessary to add a detachable support structure below a suspended portion of the model to prevent the printing material from detaching due to gravity, angle, or other issues.

### SUMMARY

Embodiments of the present disclosure provide a method of generating support members configured to support three-dimensional models, a computing device and a storage medium. Aiming to achieve the effects of optimizing support member layout and improving model printing accuracy.

In a first aspect, the present disclosure provides a method of generating support members configured for supporting three-dimensional models, including: identifying one or more sensitive portions of one or more three-dimensional models; determining one or more support positions on the one or more three-dimensional models based on one or more feasible support regions on the one or more three-dimensional models other than the one or more sensitive portions; generating one or more conforming bases according to the one or more support positions; and generating one or more support members abutting a forming platform by extending the one or more conforming bases toward the forming platform and circumventing the one or more three-dimensional models.

In some embodiments of the present disclosure, where identifying one or more sensitive portions of the one or more three-dimensional models includes: extracting a geometric parameter of the one or more three-dimensional models from mesh data of the one or more three-dimensional models; and identifying the one or more sensitive portions of the one or more three-dimensional models based on the geometric parameter, wherein the geometric parameter comprises at least one of curvature, normal change rate, and boundary acute angle of the one or more three-dimensional models.

In some embodiments of the present disclosure, where the identifying one or more sensitive portions of the one or more three-dimensional models further includes: identifying the one or more sensitive portions of the one or more three-dimensional models by using a machine learning model based on the mesh data of the one or more three-dimensional models.

In some embodiments of the present disclosure, where the determining one or more support positions on the one or more three-dimensional models according to the one or more sensitive portions includes: determining one or more support feasible regions on the one or more three-dimensional models, excluding the one or more sensitive portions; searching for the one or more support positions within the one or more support feasible regions based on support position setting parameters.

In some embodiments of the present disclosure, where the generate the one or more conforming bases according to the one or more support positions includes: generating the one or more conforming bases according to the one or more support positions and neighborhoods of the one or more support positions, wherein the neighborhoods are defined by regions covering the one or more support positions or radii from the one or more support positions.

In some embodiments of the present disclosure, where the generating the one or more support members abutting the forming platform by extending the one or more conforming bases toward the forming platform and circumventing the one or more three-dimensional models includes: generating one or more support tips by extending the one or more conforming bases along normal directions of corresponding support position of the one or more support positions, and cross sections of the one or more support tips perpendicular to the normal directions gradually decrease; generating one or more support columns abutting the forming platform by extending the one or more support tips toward the forming platform and circumventing the one or more three-dimensional models; wherein the one or more support tips and the one or more support columns cooperatively form the one or more support members.

In some embodiments of the present disclosure, where the generating the one or more support columns abutting the forming platform by extending the one or more support tips toward the forming platform and circumventing the one or more three-dimensional models includes: in response to a determination that a distance between a support column currently being generated and a support column been generated is detected to be less than a preset distance, generating the support column currently being generated biasing toward the support column been generated to merge the support column currently being generated with the support column been generated

In some embodiments of the present disclosure, the method further including: generating first print data of the one or more support members and second print data of the one or more three-dimensional models by using a 3D printer; and performing printing based on the first print data and the second print data via the 3D printer.

In a second aspect, the present disclosure provides a computing device, including: a storage device; at least one processor; and the storage device storing one or more programs that, when executed by the at least one processor, cause the at least one processor to: identify one or more sensitive portions of one or more three-dimensional models; determine one or more support positions on the one or more three-dimensional models based on one or more feasible support regions on the one or more three-dimensional models other than the one or more sensitive portions; generate one or more conforming bases according to the one or more support positions; and generate one or more support members abutting a forming platform by extending the one or more conforming bases toward the forming platform and circumventing the one or more three-dimensional models.

In a third aspect, the present disclosure provides a non-transitory storage medium having instructions stored thereon, when the instructions are executed by a one or more processors of a computing device, the one or more processors is caused to perform a method of generating support members configured to support three-dimensional models, wherein the method includes: identifying one or more sensitive portions of one or more three-dimensional models; determining one or more support positions on the one or more three-dimensional models based on one or more feasible support regions on the one or more three-dimensional models other than the one or more sensitive portions; generating one or more conforming bases according to the one or more support positions; and generating one or more support members abutting a forming platform by extending the one or more conforming bases toward the forming platform and circumventing the one or more three-dimensional models.

### BRIEF DESCRIPTION OF THE DRAWINGS

The accompanying drawings herein are incorporated into the specification and constitute a part of this specification, illustrate embodiments consistent with the present disclosure, and together with the description serve to explain the principle of the present disclosure.
FIG. 1 is a schematic flowchart of a method for generating support members configured to support three-dimensional models provided by an exemplary embodiment of the present disclosure.
FIG. 2 is a schematic diagram of a sensitive portion identification result provided by an exemplary embodiment of the present disclosure.
FIG. 3 is another schematic flowchart of a method for generating support members configured to support three-dimensional models provided by an exemplary embodiment of the present disclosure.
FIG. 4 is a schematic diagram of an effect of an avoidance support member provided by an exemplary embodiment of the present disclosure.
FIG. 5 is a schematic diagram of an effect of generating a support tip provided by an exemplary embodiment of the present disclosure.
FIG. 6 is a schematic structural diagram of a computing device provided by an exemplary embodiment of the present disclosure.

### DETAILED DESCRIPTION

Exemplary embodiments will be described in detail herein, with examples thereof illustrated in the accompanying drawings. When the following description refers to the accompanying drawings, the same numbers in different drawings represent the same or similar elements unless otherwise indicated. The implementation manners described in the following exemplary embodiments do not represent all implementation manners consistent with the present disclosure. Rather, they are merely examples of apparatuses and methods consistent with some aspects of the present disclosure as detailed in the appended claims.

In the description of the present disclosure, the terms "first", "second", are used for descriptive purposes only and are not to be understood as indicating or implying relative importance or implicitly indicating the number of the indicated technical features. Thus, features defined with "first", "second", may explicitly or implicitly include at least one of such features. In the description of the present disclosure, "a plurality of" means two or more, unless otherwise specifically defined.

Additive manufacturing has enabled customization of models according to a user's actual needs. During the process of selecting 3D printing for model printing, it is necessary to add a detachable support structure below a suspended portion of the model to prevent printing material from detaching due to gravity, angle, or other issues.

In some related technologies, identification of support areas rely on methods such as overhang analysis and island detection to determine support positions and add support member shapes of a preset shape, such as a support tip, at these locations to construct a support structure. However, in the printing of high-precision models, the above methods struggle to accurately identify detailed features on the model surface, such as textures, small holes, and assembly surfaces, thereby affecting final precision of the model. Furthermore, because the support member shape of the preset shape is difficult to perfectly conform to the surface of a complex model, it is easy to cause damage to the model surface when removing the support structure, further reducing the molding precision.

An exemplary embodiment of the present disclosure provides a method for generating support members configured to support three-dimensional models. In some examples, at least part of steps described in the embodiments of the present disclosure may be performed by a support member generation module, which may be one of the functional modules of 3D printing software. The 3D printing software may also include other suitable functional modules such as model import, model optimization, model slicing, model merging, or model design, for example, including at least the basic functional modules of the 3D printing software. In some 3D printing workflows, the 3D printing software runs on a computing device separate from the 3D printer; while in some highly integrated systems, this functionality may be built into a control computer of the 3D printer or performed by a cloud service.

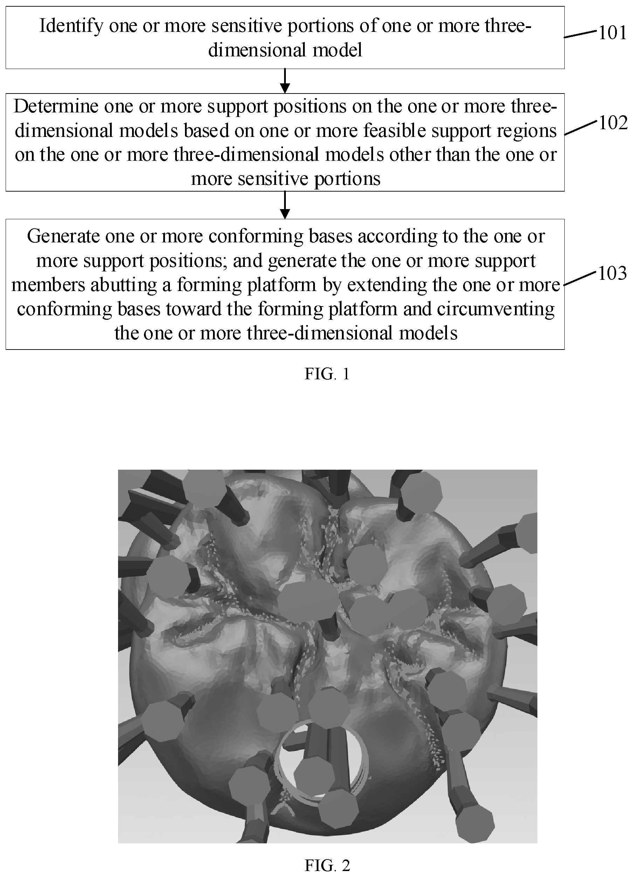

In one embodiment, as shown in FIG. 1, the method of generating support members configured to support three-dimensional models includes:
Step 101, one or more sensitive portions of the one or more three-dimensional models are identified.

The three-dimensional model refers, for example, to a model imported into 3D printing software (e.g., to be printed subsequently). During a single model import process, there may be only one three-dimensional model, or there may be multiple models. In some embodiments, multiple three-dimensional models may be imported into the 3D printing software at once, or they may be imported in multiple separate batches. During the process of importing the three-dimensional models into the 3D printing software, some or all of the three-dimensional models may be deleted, removed, or replaced with other three-dimensional models. It is understandable that when there are multiple three-dimensional models, the support member generation process for each three-dimensional model may be the same, and may be performed synchronously or asynchronously. It is important to note that when performing avoidance, consideration must be given to avoiding multiple three-dimensional models.

In some embodiments, a sensitive portion refers to a portion of the three-dimensional model where support member cannot be generated and which needs protection. If the support member is generated in the area where these portions are located, it may affect the precision, detachment, and/or use of the model. In some scenarios of printing dental three-dimensional models, for example, if the three-dimensional model is a dental crown, an inner surface of the dental crown (i.e., an assembly surface that fits with the tooth) is a sensitive portion of the model, and the area where this portion is located is a support member-restricted area. Other examples include a marginal line of a dental crown or bridge, a planting hole of a dental implant, etc. In some examples, the sensitive portion may be identified from two dimensions: function and precision. If generating support member on that portion would significantly affect the function and precision of the three-dimensional model, it may be determined as a sensitive portion.

The sensitive portion of the three-dimensional model may be identified and classified based on preset rules, may also be determined through manual annotation, or may be identified by an algorithm first and then combined with manual annotation results to determine the sensitive portion.

In one embodiment, identifying one or more sensitive portions of the one or more three-dimensional models includes:
extracting a geometric parameter of the one or more three-dimensional models from mesh data of the one or more three-dimensional models;
identifying the one or more sensitive portions of the one or more three-dimensional models based on the geometric parameter, where the geometric parameter includes at least one of curvature, normal change rate, and boundary acute angle.

It is understandable that geometric parameter quantitatively describes and measures the geometric properties of the surface of the three-dimensional model. Identifying the sensitive portion of the three-dimensional model through geometric analysis mainly involves finding areas where the geometric properties of the model surface undergo drastic changes. For example, the curvature characterizes a degree of bending of each defined area on the surface of the three-dimensional model. The printer may find a high-curvature area on the surface of the three-dimensional model based on the curvature. For example, an area associated with an edge of a cube and a region associated with a corner of a cube, and a region associated with an edge of a top surface of a cylinder. The normal change rate is used to calculate a difference in the direction of normal vectors of adjacent triangular facets/facet-defined mesh areas in the three-dimensional model. Boundary acute angle analysis analyzes the interior and exterior angles of the model's open boundaries. Areas with a large normal change rate usually indicate the presence of rapid curvature changes. It is understandable that the aforementioned high-curvature areas and rapid curvature change areas are usually the sensitive portions of the three-dimensional model, and it is unsuitable to generate support member on these areas.

When identifying the sensitive portions via the geometric parameter, for example, multiple areas where the geometric parameter exceed corresponding threshold may be identified, and an integrated portion area may be determined through clustering or region connectivity algorithms.

In other examples, more details of the three-dimensional model, such as a small hole, a slot, text, or an assembly feature, may also be identified in combination with texture or geometric pattern. For example, a geometry shape library or texture library may be pre-stored in the 3D printing software, and identification is performed by matching the local geometric shapes and textures of the three-dimensional model with the library. For instance, a template for a small hole is a geometric definition of a cylindrical inner wall. By scanning/searching the three-dimensional model for all "inward-pointing cylindrical surfaces," upon finding a match, parameters such as hole depth and radius may be identified, marking not only an area but also identifying a "hole" feature and extracting its parameters. As another example, for an assembly feature, the stored template could be a threaded hole, a pin hole, a positioning slot, or any template for other regular or irregular assembly feature. For example, in response to a determination that the 3D printing software identifies the feature, it may be considered that the areas where these features are located are designed for connection and mating with other parts and belong to sensitive portions.

In one embodiment, identifying one or more sensitive portion of the one or more three-dimensional models include:
identifying the one or more sensitive portions of the one or more three-dimensional models using a machine learning model based on mesh data of the one or more three-dimensional models.

For some areas that are not geometrically prominent but are functionally important, it may be difficult to define them using geometric parameters. Thus, they may be identified through the machine learning model. Compared to geometric analysis, the machine learning model does not rely on fixed rules but learns the characteristics of the sensitive portions from a large amount of data, thereby performing identification.

For example, a Convolutional Neural Network (CNN) is used to render the three-dimensional model into 2D images from multiple perspectives and then identify features. Alternatively, a Graph Convolutional Network (GCN) is used to directly treat the 3D mesh as a graph structure (vertices are nodes, edges are connections) and learn the relationships between vertices and edges. PointNet++ may also be used to directly process 3D point cloud data and learn local and global features of points. A segmentation model (e.g., a 3D variant of U-Net) may be used to label each vertex or facet on the model, for example, as "assembly surface" or "non-assembly surface." Alternatively, a large model including only a decoder (Decoder-only) or a pre-trained large model may be used. Such models have more parameters than ordinary machine learning models, and the three-dimensional model may be directly input into the large model or pre-trained large model to obtain one or more sensitive portions of the three-dimensional model. It is understandable that the machine learning model is obtained by training on a large amount of labeled data, or by fine-tuning a pre-trained model with a small amount of labeled data. In an actual support member generation scenario, mesh data of the three-dimensional model is input into the trained machine learning model to directly obtain identification results on the surface of the three-dimensional model. In terms of visualization, after obtaining the label for each mesh on the surface of the three-dimensional model through the trained machine learning model, different colors may be used to display different labels for intuitive differentiation. As shown in FIG. 2, the green areas are sensitive portions, while non-green areas, such as blue areas, are non-sensitive areas.

In some embodiments, to improve the accuracy of identifying model sensitive portions, a combination of geometric analysis and machine learning analysis is used for identification. By combining geometric analysis (a curvature, a normal, a boundary acute angle, etc.) and machine learning analysis, automatic identification and classification of model sensitive portions are achieved, generating a support member avoidance strategy to prevent support member from covering key feature areas.

Step 102, one or more support positions on the three-dimensional model according to one or more sensitive portions are determined.

A support position may refer to one or more representative locations on the three-dimensional model where a support structure needs to be added. The one or more representative locations should avoid the sensitive portions on the model. Therefore, after identifying one or more sensitive portions, one or more support positions should be determined within the non-sensitive area range. It should be noted that in 3D printing, not all non-sensitive areas require setting a support member or support position. Support members are primarily used to connect the model to the forming platform. Therefore, on the side of the model facing away from the forming platform, support member or support positions are usually not required. On the side of the model facing the forming platform, suitable support positions may be determined according to actual needs.

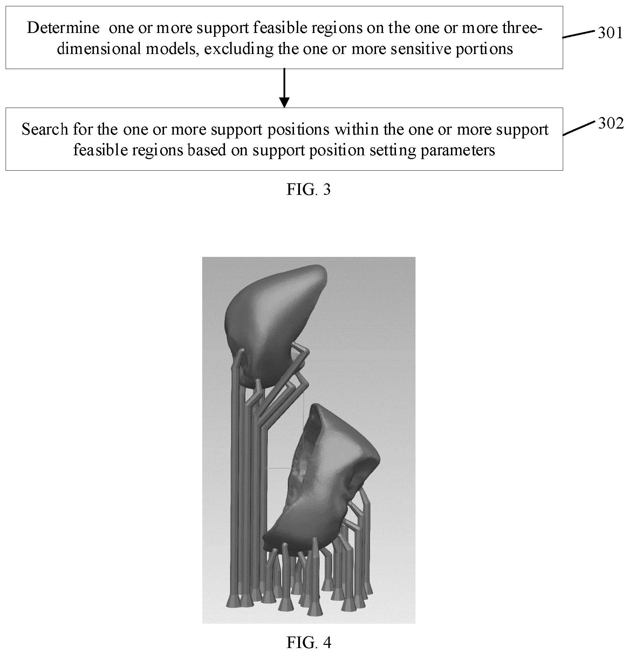

In one embodiment, as shown in FIG. 3, determining one or more support positions on the one or more three-dimensional models according to the one or more sensitive portions include:
Step 301, one or more support feasible regions on the three-dimensional model are determined excluding one or more sensitive portions.
Step 302, the one or more support positions within the one or more support feasible regions are searched based on support position setting parameters.

In one embodiment, a support feasible area refers to an area with structural feasibility, after excluding sensitive portions, to build the support member. From any point within the feasible area, the support member may be built out toward the forming platform. Specifically, a relationship between the structural feasibility describes and the forming platform includes feasible and infeasible. Feasible refers to the area facing the forming platform, and infeasible refers to the area facing away from the forming platform. Therefore, the support member-feasible area refers to the area remaining on the surface of the three-dimensional model that faces the forming platform after removing the sensitive portion.

A support position setting parameters is a series of preset conditions and thresholds that control rules for generating support members. It serves as a "screening criterion" that guides the system on how to search within the "support member-feasible area."

The support position setting parameters typically includes:
Maximum Overhang Angle: the system analyzes an angle of the model surface. Any overhanging structure exceeding this set angle (e.g., 45 degrees) is considered to require support member.
Support member Point Contact Area: Defines the size of the contact area between the support structure and the model. Too small may be unstable, too large may be difficult to remove and damage the surface.
Support member Density/Spacing: Controls the density of the support structure, affecting support member strength, material consumption, and strippability.
Support member Type Selection: e.g., tree support members or linear support members. Different types have their own applicable search and generation logic.
Distance to Forming platform: Ensures that support members are generated only where they are truly needed to connect the model and the platform. For suspended structures in higher parts of the model, support members may connect to different parts of the model itself.

The support position setting parameters may be determined by manual setting and empirical fine-tuning. For example, in some 3D printing software, a set of default parameters is pre-configured for different materials and 3D printer types. The user obtains one or more matching support position setting parameters by selecting materials, 3D printing speed, curing time, etc. Experienced users can fine-tune based on the default parameters to obtain one or more suitable support position setting parameters.

The support position setting parameters matching the three-dimensional model may also be determined based on big data and machine learning. Specifically, a large number of three-dimensional models and their corresponding, verified "successful printing parameters" may be used as a training dataset. The machine learning model will learn the complex mapping relationship from the geometric features of the three-dimensional model (such as an overhang angle, a curvature, a volume, a center of gravity) to the optimal support member parameters. When a new model is input, the machine learning model extracts its geometric features and directly predicts and outputs a set of suitable "support position setting parameters."

In practical disclosure scenarios, a rule-based and optimized automatic determination method may also be used. For example, a series of optimization objectives and constraint conditions may be designed. Optimization objectives include minimal support member material, shortest printing time, minimal support member contact area, optimal model surface quality, etc. Constraint conditions may include must successfully support member all areas exceeding the "maximum overhang angle," the support structure must be physically stable (cannot collapse on its own), must avoid sensitive areas, etc. Then, an algorithm (e.g., a genetic algorithm, a topology optimization) searches the solution space for a parameter combination that simultaneously satisfies all constraint conditions and optimizes the objectives.

In the method provided by the above implementation, the support member-feasible area is determined based on the sensitive portion, excluding the sensitive portion, and then the support member portion is searched within the support member-feasible area. This ensures that the searched support member portion will not cover the sensitive portion, thereby improving the printing accuracy of the model.

Step 103, one or more conforming bases are generated according to one or more support positions, one or more support members abutting the forming platform are generated by extending the one or more conforming bases toward the forming platform and circumvent the three-dimensional model.

In some examples, the support member may include a support base, a support column, and a support tip. The support base is the bottom part of the support member that contacts the forming platform, providing strong adhesion to ensure the entire support structure adheres firmly to the forming platform during printing, thereby providing support member and stabilization for the model. The support tip is the top part of the support member that contacts the model, and the support column is a central trunk connecting the base and the tip. In a procedure for generating the support member, generation typically proceeds in a top-down order, starting with the support tip, followed by the support column, and finally the support base. In some examples, the support tip is typically a transitional structure from the support column to the model surface, having a certain shape, such as a pyramid or other irregular column. The area where the support tip contacts the model surface is defined as the conforming base.

In some examples, to allow the three-dimensional model to better detach from the forming platform after printing, the support tip is formed in a shape that gradually narrows toward the forming platform direction. This allows a connection point between the support tip and the support column to withstand smaller shear forces, facilitating the detachment of the three-dimensional model from the support member.

According to the foregoing description herein, a support position may be a specific coordinate location, typically a coordinate location of a point on the surface of the three-dimensional model.

After determining the support position, a conforming base that fully conforms to the model surface is generated, for example, extending outward from the support position. The shape of the conforming base may be a preset shape or may be defined based on a preset radius or preset area.

It is understandable that the conforming base is also subject to the limitations of the sensitive portion described herein, i.e., the conforming base derived from the support position should also be located within the area defined by the support member-feasible area.

Specifically, one or more conforming bases are generated according to the one or more support position includes:
the one or more conforming bases are generated according to the one or more support positions and a neighborhood of the one or more support position, where the neighborhood is defined by an area or a radius.

For each support position, a conforming base is generated based on geometric parameters within its neighborhood. This may be achieved by performing surface analysis on the three-dimensional model, extracting local curvature and normal information, and then generating a "conforming base" at the support member point that has the same curvature as or locally fits the model surface.

Specifically, a reference mesh within the neighborhood of the support position is determined. This reference mesh surrounds the support member point, and the range of the neighborhood is defined using area or radius, and may also be defined based on the preset shape of the conforming base. For example, a region-growing algorithm based on geodesic or Euclidean distance is used to find all interconnected triangular facets within a certain range around the support position. These triangular facets are "copied" or "separated" from an original model mesh to form a new, independent small mesh patch. This mesh patch precisely conforms to the local curvature of the model surface. This cropped mesh patch that conforms to the shape of the model surface is the conforming base.

Among them, the shape of the conforming base may be a circular arc patch, an elliptical patch, or a local NURBS surface segment. Compared to, for example, a small dot or a small cylinder, the contact between this method and the surface of the three-dimensional model is a fully conforming surface, and this surface does not exceed the range of the model surface (support member-feasible area).

After generating the conforming base, a support column to the forming platform may be generated. During the generation process, the avoidance principle is followed to avoid colliding with the three-dimensional model. When there are multiple three-dimensional models in the printing space, it is necessary to avoid all three-dimensional models.

In the method provided by the above embodiments, one or more sensitive portions of a three-dimensional model is identified. One or more support positions on the three-dimensional model are determined according to the one or more sensitive portions. One or more conforming bases are generated based on the one or more support positions; and one or more support members abutting the forming platform are generated by extending the one or more conforming bases toward a forming platform while avoiding the three-dimensional model. By automatically identifying and classifying the sensitive portions of the model and generating a support member avoidance strategy, the support member is prevented from covering the sensitive portion areas of the model, reducing damage to the sensitive portions. By generating a support base conforming to the model surface through local curvature and normal analysis, and introducing a merging logic between support columns, support member density is reduced, and support member stability and removability are optimized.

In one embodiment, one or more support members abutting the forming platform is generated by extending the one or more conforming bases toward a forming platform while avoiding the three-dimensional model includes:
one or more support tips are generated by extending the one or more conforming bases in a normal direction of a corresponding support position and continuously narrowing;
one or more support columns abutting the forming platform are generated by extending one or more support tips toward the forming platform while avoiding the three-dimensional model, and the support member is generated according to the one or more support tips and the one or more support columns.

In one or more embodiment, the normal direction of the support position refers to the normal direction of the point at the support position. The conforming base extends away from the model along the normal direction and continuously narrows during extension, forming a support tip whose radial dimension decreases towards the forming platform. The length of the extension of the conforming base along the normal direction may be determined based on a minimum gap parameter of the three-dimensional model.

After generating the support tip, a support column is then generated from the support tip toward the forming platform. At this time, the support column may be generated in a direction perpendicular to the forming platform. During the generation process, collision detection is performed in real-time. Once a possible collision is detected, the generation direction is changed promptly. After detecting that the column is away from the model and within a safe range, an attempt may be made again to continue generating the support column in a direction perpendicular to the forming platform until it abuts the forming platform. The effect of avoidance support member is shown in FIG. 4. The computing device may, based on a position of the model in space and a real-time printing process of the support member, detect in real time whether a collision occurs between the model and the support member. If a collision occurs, the computing device may search within a neighborhood range for a position where no collision occurs, thereby changing the printing direction of the support member. The safe range may be empirically designed, and the safe range may refer to a distance in a horizontal direction between the support member and the model, for example, no less than 1 mm or 2 mm.

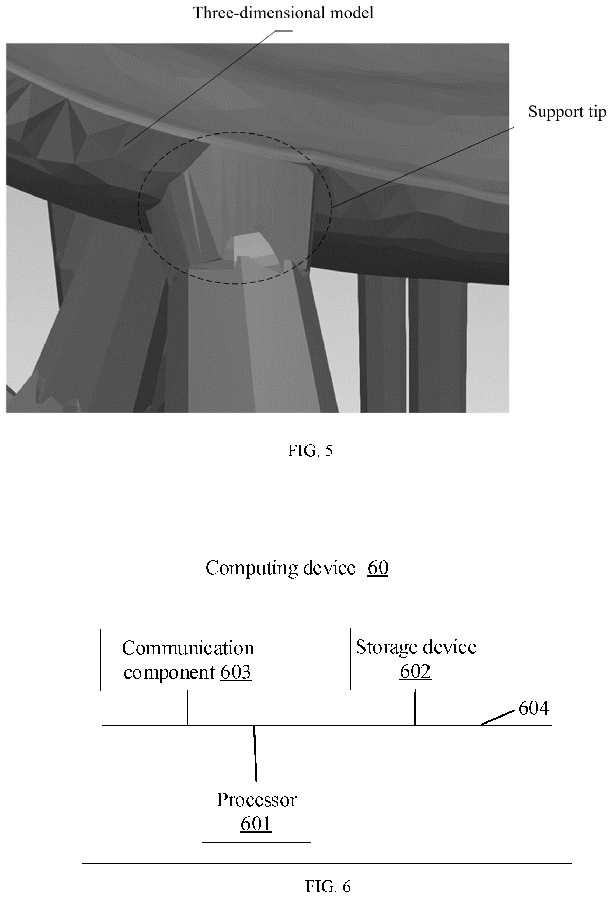

In the method provided by the above embodiment, during the extension of the conforming base, the size of the conforming base is gradually reduced, so that the contact area between the support tip and the support column is reduced, as shown in FIG. 5, which is beneficial for removing the support structure.

In one embodiment, the process of generating the support tip includes: offsetting the conforming base in the normal direction of the corresponding support position away from the model by a distance (e.g., a small distance). This results in two segments of mesh: the conforming base and the offset conforming base. A new triangular facet is used to connect the boundaries of these two mesh patches that have the same shape but different positions, forming a closed, thick "gasket" as the support tip. The support tip is a hollow, three-dimensional support tip structure with a uniform thickness. The inner surface of this structure perfectly conforms to the model, while the outer surface is an equidistant offset of the inner surface. During offsetting, the conforming base may also be reduced in size before offsetting.

The above method does not add a support tip onto the three-dimensional model but generate a support member contact structure integrally formed with it on the model surface, providing maximum contact area and optimal shape fit. It may support complex curved surfaces very stably, greatly reducing the risk of print failure. Furthermore, the surface contact disperses the support member's pulling force over a larger area, reducing the "pimple marks" or surface depressions caused by point support members, minimizing damage to critical surfaces from support members.

In one embodiment, the method further includes:
during a process of extending based on the support tip toward the forming platform while avoiding the three-dimensional model to generate the one or more support column abutting the forming platform, in response to a determination that a distance between a currently generating support column and an already generated support column is detected to be less than a preset distance, biasing toward the already generated support column to merge the currently generating support column with the already generated support column.

During the generation process of the support column, the support column is generated segment by segment, and collision detection and avoidance processing are performed after each segment of the support column is generated. During this process, support member merging processing may also be performed. When it is detected that the support column being generated is close to an already generated support column, it is determined whether the distance is less than a preset distance. In response to a determination that the distance is less than the preset distance, continue to generate the support column toward the direction of the already generated support column, thereby achieving merging.

It should be noted that during the planning phase of 3D printing support member generation, distances between all support member paths are detected. Similarly, in response to a determination that the distance is less than the preset distance, the support member paths are adjusted to merge at least two support member paths that are close together into one support member path, and then the support column is generated.

In the method provided by the above embodiment, merging support columns may effectively reduce support member volume and improve structural stability.

In one embodiment, an embodiment of the present disclosure further provides a method for printing a three-dimensional model, including:

acquiring a three-dimensional model;

generating one or more support members for the three-dimensional model based on the method for generating one or more support members configured to support one or more three-dimensional models according to any of the above embodiments;

generating first print data of the one or more support members and second print data of the one or more three-dimensional models by using the 3D printer;

performing printing based on the first print data and the second print data via the 3D printer.

It is understandable that the above method for printing a three-dimensional model may be performed by a system including a computing device and a 3D printer communicatively coupled to the computing device. For example, the computing device generates one or more support based on the three-dimensional model, and generates sliced data for printing the one or more support member and the three-dimensional model, and the 3D printer performs the printing. Alternatively, the above method for printing a three-dimensional model may be performed by the 3D printer itself.

It should be understood that although the steps in the flowcharts involved in the above embodiments are shown sequentially with arrows, these steps are not necessarily executed sequentially in the order indicated by the arrows. Unless explicitly stated herein, the execution of these steps is not strictly limited in order, and they may be executed in other orders. Moreover, at least a portion of the steps in the flowcharts involved in the above embodiments may include a plurality of sub-steps or stages. These sub-steps or stages are not necessarily executed at the same time but may be executed at different times. The order of execution of these sub-steps or stages is also not necessarily sequential but may be performed alternately or in rotation with at least a portion of other steps or sub-steps/stages of other steps.

The present disclosure also provides a printer that executes the method for generating one or more support members configured to support one or more three-dimensional models and/or the method for printing a three-dimensional model described above.

FIG. 6 is a schematic structural diagram of a computing device provided by the present disclosure. As shown in FIG. 6, the computing device 60 provided in this embodiment includes: one or more processor 601 and a storage device 602. In one or more embodiment, the computing device 60 further includes a communication component 603. The processor 601, the storage device 602, and the communication component 603 are connected via a bus 604.

In a specific implementation process, the one or more processor 601 executes computer-executable instructions stored in the storage device 602, causing the one or more processor 601 to perform the above method.

For the specific implementation process of the processor 601, reference may be made to the above method embodiments, and its implementation principle and technical effect are similar, so they will not be repeated here in this embodiment.

In the above embodiments, it should be understood that the processor may be a central processing unit (CPU), or other general-purpose processors, a digital signal processor (DSP), an disclosure specific integrated circuit (ASIC), etc. A general-purpose processor may be a microprocessor or the processor may be any conventional processor, etc. The steps of the method disclosed in conjunction with the invention may be directly embodied as being executed by a hardware processor, or executed by a combination of hardware and software modules in the processor.

The storage device may include high-speed random access memory (RAM), and may also include non-volatile memory (NVM), such as one or more disk storage device.

The bus may be an Industry Standard Architecture (ISA) bus, a Peripheral Component Interconnect (PCI) bus, or an Extended Industry Standard Architecture (EISA) bus, etc. The bus may be divided into address bus, data bus, control bus, etc. For ease of representation, the bus in the drawings of the present disclosure is not limited to only one bus or one type of bus.

The present disclosure also provides a computer program product, comprising a computer program, which, when executed by a processor, implements the above method.

The present disclosure also provides a computer-readable storage medium, wherein the computer-readable storage medium stores computer-executable instructions, and when a processor executes the computer-executable instructions, the above method is implemented.

The above readable storage medium may be implemented by any type of volatile or non-volatile storage device or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk, or optical disk. The readable storage medium may be any available medium that can be accessed by a general-purpose or special-purpose computer.

An exemplary readable storage medium is coupled to the processor, enabling the processor to read information from the readable storage medium and write information to the readable storage medium. Of course, the readable storage medium may also be an integral part of the processor. The processor and the readable storage medium may be located in an disclosure specific integrated circuit (ASIC). Of course, the processor and the readable storage medium may also exist as discrete components in the device.

The division of units is merely a logical function division, and there may be other division manners in actual implementation. For example, multiple units or components may be combined or integrated into another system, or some features may be ignored or not executed. Another point is that the mutual coupling, direct coupling, or communication connections shown or discussed may be indirect couplings or communication connections through some interfaces, devices, or units, which may be electrical, mechanical, or in other forms.

Units described as separate components may or may not be physically separate. Components shown as units may or may not be physical units, that is, they may be located in one place or distributed over multiple network units. Some or all of the units may be selected according to actual needs to achieve the purpose of the solution of this embodiment.

In addition, various functional units in various embodiments of the present invention may be integrated into one processing unit, each unit may exist physically separately, or two or more units may be integrated into one unit.

If the functions are implemented in the form of software functional units and sold or used as independent products, they may be stored in a computer-readable storage medium. Based on such an understanding, the technical solution of the present invention, in essence, or the part contributing to the prior art, or part of the technical solution, may be embodied in the form of a software product. The computer software product is stored in a storage medium and includes several instructions for causing a computing device (which may be a personal computer, a server, or a network device, etc.) to perform all or part of the steps of the methods described in various embodiments of the present invention. The aforementioned storage medium includes: a USB flash drive, a mobile hard disk, a read-only memory (ROM), a random access memory (RAM), a magnetic disk, or an optical disk, and other media that can store program codes.

A person of ordinary skill in the art may understand that all or part of the steps of implementing the above method embodiments can be completed by program instructions related to hardware. The aforementioned program can be stored in a computer-readable storage medium. When executed, the program performs the steps of the above method embodiments. The aforementioned storage medium includes: a ROM, a RAM, a magnetic disk, or an optical disk, and other media that can store program codes.

Finally, it should be noted that: a person skilled in the art will readily conceive of other embodiments of the present invention after considering the specification and practicing the invention disclosed herein. The present invention is intended to cover any variations, uses, or adaptations of the present invention, which follow the general principles of the present invention and include common general knowledge or customary technical means in the technical field not disclosed by the present invention. The specification and embodiments are to be regarded as exemplary only, and the true scope and spirit of the present invention are indicated by the following claims.

## Claims

1. A method of generating support members configured to support three-dimensional models, comprising:
identifying one or more sensitive portions of one or more three-dimensional models;
determining one or more support positions on the one or more three-dimensional models based on one or more feasible support regions on the one or more three-dimensional models other than the one or more sensitive portions;
generating one or more conforming bases according to the one or more support positions; and
generating one or more support members abutting a forming platform by extending the one or more conforming bases toward the forming platform and circumventing the one or more three-dimensional models.

2. The method according to claim 1, wherein the identifying one or more sensitive portions of the one or more three-dimensional models comprises:
extracting a geometric parameter of the one or more three-dimensional models from mesh data of the one or more three-dimensional models; and
identifying the one or more sensitive portions of the one or more three-dimensional models based on the geometric parameter, wherein the geometric parameter comprises at least one of curvature, normal change rate, and boundary acute angle of the one or more three-dimensional models.

3. The method according to claim 2, wherein the identifying one or more sensitive portions of the one or more three-dimensional models further comprises:
identifying the one or more sensitive portions of the one or more three-dimensional models by using a machine learning model based on the mesh data of the one or more three-dimensional models.

4. The method according to claim 1, wherein the determining one or more support positions on the one or more three-dimensional models according to the one or more sensitive portions comprises:
determining one or more support feasible regions on the one or more three-dimensional models, excluding the one or more sensitive portions;
searching for the one or more support positions within the one or more support feasible regions based on support position setting parameters.

5. The method according to claim 1, wherein the generating the one or more conforming bases according to the one or more support positions comprises:
generating the one or more conforming bases according to the one or more support positions and neighborhoods of the one or more support positions, wherein the neighborhoods are defined by regions covering the one or more support positions or radii from the one or more support positions.

6. The method according to claim 1, wherein the generating the one or more support members abutting the forming platform by extending the one or more conforming bases toward the forming platform and circumventing the one or more three-dimensional models comprises:
generating one or more support tips by extending the one or more conforming bases along normal directions of corresponding support position of the one or more support positions, and cross sections of the one or more support tips perpendicular to the normal directions gradually decrease;
generating one or more support columns abutting the forming platform by extending the one or more support tips toward the forming platform and circumventing the one or more three-dimensional models; wherein the one or more support tips and the one or more support columns cooperatively form the one or more support members.

7. The method according to claim 6, wherein the generating the one or more support columns abutting the forming platform by extending the one or more support tips toward the forming platform and circumventing the one or more three-dimensional models comprises:
in response to a determination that a distance between a support column currently being generated and a support column been generated is detected to be less than a preset distance, generating the support column currently being generated biasing toward the support column been generated to merge the support column currently being generated with the support column been generated.

8. The method according to claim 1, further comprising:
generating first print data of the one or more support members and second print data of the one or more three-dimensional models by using a 3D printer; and
performing printing based on the first print data and the second print data via the 3D printer.

9. The method according to claim 1, wherein the identifying one or more sensitive portions of the one or more three-dimensional models comprises:
matching local geometric shapes of the one or more three-dimensional models with a geometry shape library.

10. The method according to claim 1, wherein the generating one or more conforming bases comprises:
extracting local curvature and normal information for each support position, and generating the one or more conforming base fitting the support position.

11. The method according to claim 1, wherein the generating one or more support columns comprises:
in response to detecting that a distance between at least two support member paths is less than a preset distance, merging the at least two support member paths into one support member path to generate a support column.

12. The method according to claim 1, wherein the one or more support positions are located on a side of the one or more three-dimensional models facing the forming platform.

13. The method according to claim 1, wherein the generating one or more support members abutting the forming platform comprises:
generating the one or more support members in a top-down order by first generating a support tip, then generating a support column, and finally generating a support base.

14. A computing device (60), comprising:
a storage device (602);
at least one processor (601); and
the storage device (602) storing one or more programs that, when executed by the at least one processor (601), cause the at least one processor (601) to implement the method of generating support members configured to support three-dimensional models according to any one of claims 1 to 13.

15. A non-transitory storage medium having instructions stored thereon, when the instructions are executed by one or more processors (601) of a computing device (60), the one or more processors (601) are caused to perform the method of generating support members configured to support three-dimensional models according to any one of claims 1 to 13.
